# EUROPEAN PATENT APPLICATION

(11) **EP 4 397 493 A1**
(43) Date of publication of application: **10.07.2024**
(21) Application number: 23214272.9
(22) Date of filing: 05.12.2023
(51) Int. Cl.: B33Y 10/00, B33Y 30/00, B22F 10/25, B22F 12/10, B22F 12/55, B23K 26/342, B22F 3/15, B22F 10/38, B22F 10/64, B22F 10/85, B22F 12/00, B22F 12/53, B22F 12/84, B22F 12/90, B33Y 50/02, F27B 1/00

(54) **APPARATUS AND METHOD TO MANAGE TEMPERATURE AND STRESS IN A PART DURING ADDITIVE MANUFACTURING**

(30) Priority: 05.01.2023 US 202318093673
(71) Applicant: General Electric Company, Schenectady, NY 12345 (US)
(72) Inventor: CORSMEIER, Donald M., Schenectady, 12345 (US)
(74) Representative: Hafner & Kohl PartmbB

(57) **Abstract**

A method (300) of additively manufacturing a workpiece (102) may include depositing and melting a material on a build plate (104) by translating a deposition head (112) of an additive manufacturing apparatus (100) over the build plate (104) to form a layer of deposited material; and heating the deposited material with an oven (130) after the layer is deposited on the build plate (104), wherein the oven (130) comprises a furnace body (132) and an oven lid (136) movable with the deposition head (112) and disposable on the furnace body (132) to enclose a heated build chamber (128) of the oven (130).

## Description

### BACKGROUND

### Field

The present specification generally relates to additive manufacturing and, more particularly, to temperature and stress management of an additively manufactured object during a build process.

### Technical Background

Additive manufacturing is a suite of emerging technologies that fabricate three-dimensional objects directly from digital models through an additive process, typically by depositing material layer upon layer and joining successive layers in place. In some additive manufacturing modalities, a heat source is typically applied to a layer of build material to selectively melt the layer of build material such that the build material eventually solidifies in a desired configuration as a layer of a three dimensional object.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts an additive manufacturing apparatus, according to one or more embodiments described herein;
FIG. 2 schematically depicts the additive manufacturing apparatus shown in FIG. 1 where a deposition head and an oven lid of the additive manufacturing apparatus are in a different position, according to one or more embodiments described herein;
FIG. 3 depicts a flow chart diagram illustrating a method of additively manufacturing a workpiece while managing residual stresses in the workpiece, according to one or more embodiments described herein;
FIG. 4 schematically depicts an additive manufacturing apparatus incorporating an autoclave, according to one or more embodiments described herein;
FIG. 5 schematically depicts an additive manufacturing apparatus incorporating a plurality of autoclaves, according to one or more embodiments described herein; and
FIG. 6 schematically depicts a top view of another additive manufacturing apparatus having an array of autoclaves, according to one or more alternate embodiments described herein.

### DETAILED DESCRIPTION

During the heating and cooling cycles involved in the additive manufacturing process, stresses may build up in the three dimensional obj ect being built. For example, if the build material is a metal, the build material may shrink as the build material solidifies after being melted. This shrinking may result in internal residual stresses and distortion. Such internal residual stresses and distortion may induce cracks in the three dimensional object. This is especially the case if the three dimensional object being built is relatively large or constructed from less ductile materials (e.g., alloys). Accordingly, a method for managing such internal residual stresses and distortion during the additive manufacturing process is needed.

Reference will now be made in detail to embodiments of methods of heating a workpiece being formed by an additive manufacturing apparatus during the process of building the workpiece. In embodiments, the additive manufacturing apparatus comprises a build plate upon which the workpiece is built and a deposition head that is translatable with respect to the build plate. In embodiments, the deposition head is configured to direct both an energy beam from an energy beam source and deposition material to a common location such that the deposition material is melted and fused with an energy beam from the energy beam source as the deposition head is translated over the build plate to deposit a layer of the deposition material on the build plate to form a portion of the workpiece. The additive manufacturing apparatus comprises an oven comprising an oven lid and a furnace body. The furnace body defines a heated build chamber in which the build plate is disposed and the oven lid moves in conjunction with the deposition head when the deposition head is translated with respect to the build plate and the furnace body. The oven lid also includes an opening through which the deposition material and the energy beam are provided to the heated build chamber from the deposition head. The oven lid is either in physical contact with the furnace body (e.g., slidably connected) or disposed in close proximity to the furnace body such that the heated build chamber is substantially enclosed irrespective of a position of the deposition head. Such an oven structure facilitates heat treatments being applied to the workpiece at any point during the build process, which facilities the alleviation of residual stresses in the workpiece and therefore construction of larger workpieces or workpieces constructed of less ductile materials than possible when using conventional additive manufacturing apparatuses. In embodiments, the furnace body is configured as an autoclave to pressurize the cavity when an autoclave lid is provided on the furnace body to seal the cavity therein.

As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. When the term "about" is used in describing a value or an end-point of a range, the specific value or end-point referred to is comprised. Whether or not a numerical value or end-point of a range in the specification recites "about," two embodiments are described: one modified by "about," and one not modified by "about." It will be further understood that the endpoints of each of the ranges are significant both in relation to the other endpoint, and independently of the other endpoint.

Directional terms as used herein - for example up, down, right, left, front, back, top, bottom - are made only with reference to the figures as drawn and are not intended to imply absolute orientation.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, comprising: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

As used herein, the term "additive manufacturing" encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. Certain embodiments described in the present disclosure may pertain to directed energy deposition AM techniques, such as Laser Freeform Manufacturing Technology (LFMT), Selective Laser Melting (SLM), Powder-Bed Electron Beam Melting (EBM), Electron Beam Free Form Fabrication (EBF3), Laser Engineered Net Shape (LENS), and others. Though certain implementations of the present disclosure are described with respect to a certain AM technique, such examples should not be seen as limiting.

The term "substantially" may be utilized herein to represent the inherent degree of uncertainty that may be attributed to any quantitative comparison, value, measurement, or other representation. This term is also utilized herein to represent the degree by which a quantitative representation may vary from a stated reference without resulting in a change in the basic function of the subject matter at issue.

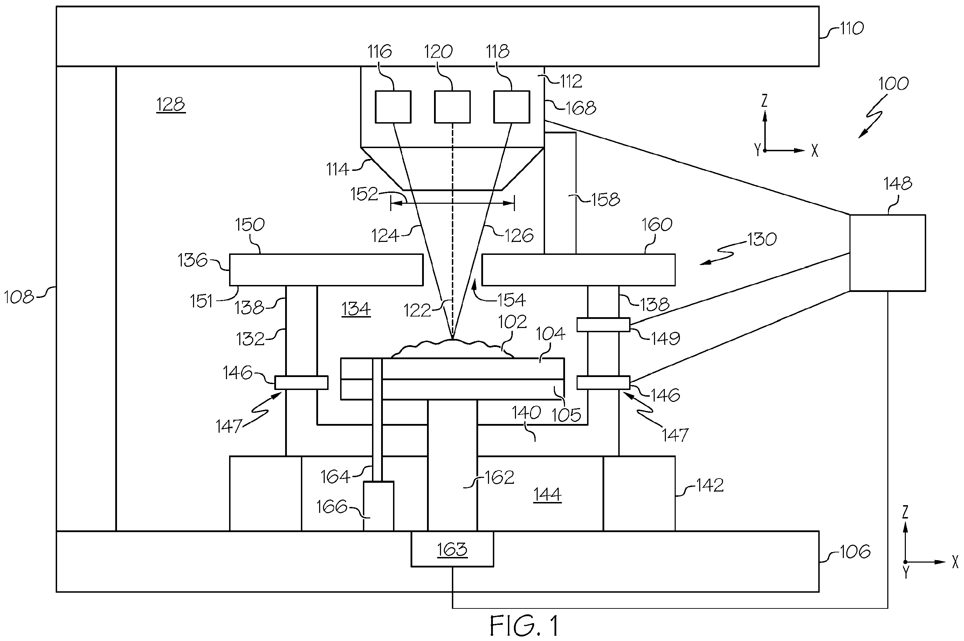

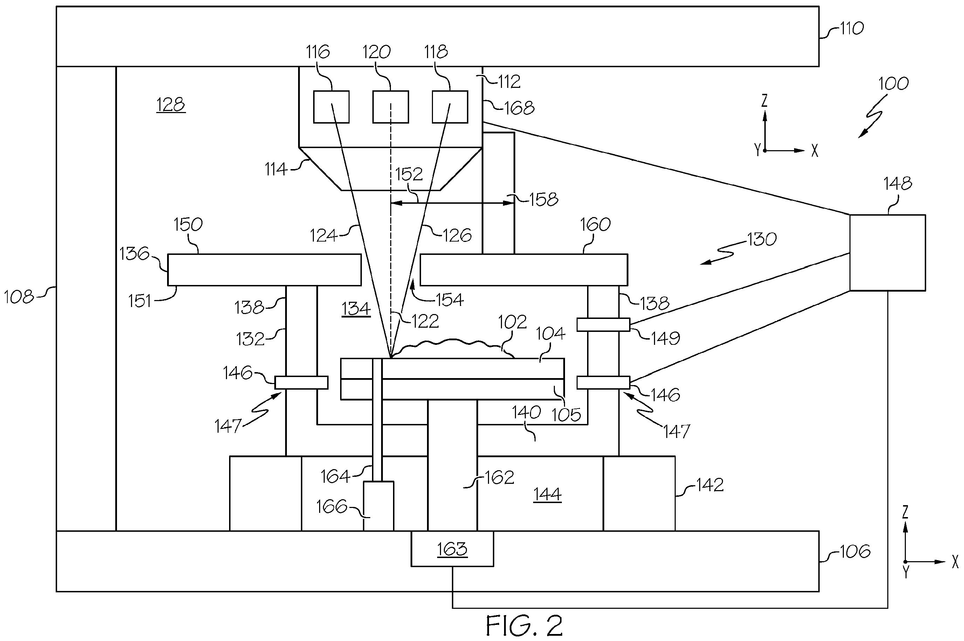

Referring now to FIGS. 1 and 2, an additive manufacturing apparatus 100 is schematically depicted. The additive manufacturing apparatus 100 is configured to construct a workpiece 102 on a build plate 104. A deposition head 112 is attached to a support structure, shown as support arms 108 and 110. The deposition head 112 and the build plate 104 are generally movable with respect to one another. For example, the support arm 110 may include a movable structure (e.g., a translation stage) and a motor or other actuation device (not shown) coupled to the deposition head 112 such that the deposition head 112 is movable in a plane (e.g., the x-y plane) parallel to the build plate 104. The deposition head 112 may have a first range of motion 152 in the x-direction and a second range of motion (not shown) in the y-direction (e.g., a center of the deposition head 112 may be movable between ends of the first range of motion 152). In embodiments, the build plate 104 is rotatable about an axis extending in the z-direction. For example, the build plate 104 may be provided on a base plate 105 and rotate relative to the base plate 105. For example, the base plate 105 may include a motor that rotates the build plate 105, or the build plate 104 may include a motor that rotates the build plate 104 on the base plate 105, or the base plate 105 may be rotated to thereby cause rotation of the build plate 104 provided thereon. Alternatively or additionally, embodiments may include an actuation device 163 that vertically translates the build plate 104 in the z-direction and/or rotates the build plate 104. Where utilized, the actuation device 163 may also rotate the base plate 105 and the build plate 104 thereon. However, the base plate 105 and/or the actuation device 163 are optional.

The deposition head 112 includes an energy beam source 120 configured to emit an energy beam 122 and material sources 116 and 118. While the energy beam source 120 and material sources 116 and 118 are shown to be disposed inside the deposition head 112, it should be appreciated that all or portions of the energy beam source 120 and material sources 116 and 118 may be disposed on the exterior of the deposition head 112. For example, in embodiments, the material sources 116 and 118 include powder delivery systems disposed on the exterior of the deposition head 112, which may include a pressurized gas source configured to convey powder (e.g., a metal or an alloy powder) to the deposition head 112. In such implementations, the shown material sources 116 and 118 may include powder nozzles extending through a material nozzle 114 attached to the deposition head 112. The material nozzles may be configured to provide material feeds 124 and 126 (e.g., in the form of powder jets) to the build plate 104. In other embodiments, the material sources 116 and 118 may include material spools and feeders (not shown) configured to provide material feeds 124 and 126 (e.g., as metallic wire) to the build plate 104 for incorporation into the workpiece 102. Such materials spools and feeders may be attached to an exterior surface 168 of the deposition head 112. While two material sources 116 and 118 are shown, it should be appreciated that any number of material sources may be included consistent with the present disclosure. The material sources 116, 118 may include any number of materials or mixture of materials, including but not limited to Titanium alloys (e.g., Ti-6-4 or Ti-6-2-4-2), precipitation hardenable nickel super alloys (INCO-718 or RENE-41), precipitation hardenable steels (e.g., 17-4-PH or 15-5-PH), etc.

The energy beam source 120 may take various forms depending on the implementation. For example, in embodiments, the energy beam source 120 may comprise a laser beam source and optics configured to direct a laser beam (i.e., the energy beam 122 is a laser beam) having a desired energy density (e.g., a focal point) to a build surface on the build plate 104. The energy beam source 120 may be disposed externally to the deposition head 112, and the shown energy beam source 120 disposed in the deposition head 112 may comprise a radiation direction device (e.g., a reflector). In embodiments, the energy beam source 120 may take various other forms (e.g., an electric arc, a plasma source, and an electron beam source). For example, the energy beam source 120 may comprise an electron emitter connected to a power supply and at least one focusing coil configured to direct an electron beam (i.e., the energy beam 122 is an electron beam) to a build surface on the build plate 104. In embodiments where an electron beam is used to fuse the deposition material, the build chamber 128 (e.g., encompassing the deposition head 112 and the build plate 104) may be placed in a vacuum or an oxygen-reduced environment.

The material feeds 124 and 126 are fed into the path of the energy beam 122, which heats the deposition material. A melt pool of the deposition material may be formed at a build surface on the build plate 104. For example, the melt pool may be directly on the build plate 104 (e.g., if the layer of deposition material being deposited is an initial layer of the workpiece 102) or on layers of the workpiece 102 previously deposited on the workpiece 102 via the additive manufacturing apparatus 100. By controlled movement of the deposition head 112 with respect to the build plate 104, a layer of deposition material may be deposited on the build plate 104 as a melt pool.

Based on the size of the workpiece 102 it is contemplated that after deposition of the layer of deposition material, the melt pool may be allowed to cool prior to depositing another layer of deposition material. For example, while the present disclosure is not so limited this may be especially true for large format parts. As the melt pool cools, the deposition material may shrink, resulting in a residual stress in the workpiece 102. Such residual stress may eventually cause cracking or warping of the workpiece 102. Without a way of controlling such stresses created by thermal fluctuations in the deposited material, the additive manufacturing apparatus 100 may not be capable of building certain types of workpieces 102. If the material feeds 124 and 126 are a less flexible material such as an alloy, the additive manufacturing apparatus 100 may not be able to produce workpieces 102 of such materials, especially if such workpieces 102 possess features conducive to stress buildup. For example, alloys such as Ti-6-2-4-2 are difficult to work with. With these types of materials, because of their low ductility (relative to alloys such as Cobalt-Chrome), they can build up substantial strain as successive layers of it are built up and then begin to cool, and because such materials limited ductility, the strain eventually builds up enough to where the strength of the material is exceeded and a portion shears free. Additionally, such residual stress buildup may also prevent the additive manufacturing apparatus 100 from constructing workpieces 102 with relatively large geometry, for example, as workpieces 102 that are generally thicker contain more layers of deposition material may thus include more amounts of accumulated residual stress.

With the foregoing in mind, the additive manufacturing apparatus 100 includes an oven 130. The oven 130 includes a furnace body 132 that defines a cavity 134 in which the build plate 104 is disposed. The furnace body 132 includes sidewalls 138 and a floor 140, which define a cavity 134 having an open top. An oven lid 136 may be provided on the furnace body 132 to at least partially enclose the open top of the cavity 134, and thereby further insulate the cavity 134. As hereinafter described, the furnace body 132 and oven lid 136 substantially enclose the cavity 134 such that the cavity 134 is a heated build chamber that encompasses the immediate vicinity of the build plate 104 and workpiece 102. In other words, the furnace body 132 and oven lid 136 define a sub-volume within the additive manufacturing apparatus 100 that may be selectively heated to temperatures that are different than that of an ambient environment of the additive manufacturing apparatus 100. As described, the oven lid 136 is sufficiently sized such that it covers the cavity 134 during its entire range of motion..

The furnace body 132 and oven lid 136 may take a variety of different forms depending on the implementation. In embodiments, the furnace body 132 and the oven lid 136 may have corresponding geometries. The example shown in FIG. 1 depicts the cavity 134 possessing a substantially square-shaped cross-section. In such an embodiment, the furnace body 132 may be substantially box-shaped, while the cavity 134 may possess a substantially planar sheet shaped cross-section. Other implementations are envisioned where the furnace body 132, the cavity 134, and the oven lid 136 have a variety of different shapes. For example, in embodiments, the furnace body 132 may be substantially round (e.g., thereby defining the cavity 134 with a substantially cylindrical shape), and the oven lid 136 may be provided with a corresponding geometry. In the illustrated embodiment, the oven lid 136 is provided parallel to the build plate 104, whereas in other embodiments, the oven lid 136 may be non-parallel to the build plate 104 (e.g., the oven lid 136 may extend at an incline with respect to the x-y plane or be curved).

The cavity 134 defined by the furnace body 132 and enclosed via the oven lid 136 may also be a variety of sizes. For example, in embodiments, the furnace body 132 is designed such that the cavity 134 is just large enough to fit the build plate 104 and the cavity 134 possess a depth (e.g., in the z-direction of the depicted coordinates) that is just large enough to accommodate the workpiece 102 to be constructed via the additive manufacturing apparatus 100 having desired thickness. Such an embodiment is beneficial in that the volume needed to be heated (e.g., the volume of gas, vacuum, etc.) via the oven 130 is minimized such that heating times are reduced and greater heating efficiency is achieved. However, alternative embodiments are envisioned where the furnace body 132 and/or the cavity 134 are larger relative to the build plate 104 (e.g., comprising larger gaps between the build plate 104 and sidewalls 138 and the floor 140 of the furnace body 132). Such embodiments including the cavity 134 with such larger dimensions may be beneficial in that they are less susceptible to disruptions from waste material (e.g., powder from the material feeds 124 and 126 that is not fused into the workpiece 102).

In embodiments, the furnace body 132 is stationary within the additive manufacturing apparatus 100. As shown, the furnace body 132 is attached to oven support structure 142 disposed on a base 106 of the additive manufacturing apparatus 100. The oven support structure 142 may including an opening such that a cavity 144 is defined between the floor 140 of the furnace body 132 and the base 106. In embodiments, the oven support structure 142 includes a movable platform such that the furnace body 132 is movable within the additive manufacturing apparatus 100. In embodiments, an alternative oven support may be attached to the support arm 110 (e.g., the furnace body 132 may be affixed to sidewalls of the additive manufacturing apparatus 100) such that the furnace body 132 is held in spaced relation to the base 106. Such space between the base 106 and the floor 140 (e.g., in the form of the cavity 144) beneficially provides space for additional components (e.g., a build plate support 162 or an excess bin 166) directly beneath the furnace body 132. In embodiments, the furnace body 132 is directly disposed on the base 106.

The oven 130 includes heating elements 146 extending through openings 147 in the sidewalls 138 of the furnace body 132 into the cavity 134. While the oven 130 is shown to only include two of the heating elements 146 extending through the sidewalls 138 of the furnace body 132, the oven 130 may include any number of the heating elements 146 disposed at various locations within the additive manufacturing apparatus 100. For example, certain embodiments may include the heating elements 146 located in or extending through the oven lid 136. Alternatively or additionally, the heating elements 146 may extend through the floor 140 of the furnace body 132. In embodiments, the heating elements 146 could be embedded within the sidewalls 138 and/or the oven lid 136, and/or the floor 140. Some embodiments may include a building base (not shown) upon which the build plate 104 is disposed in the cavity 134. Such embodiments may include the heating elements 146 extending through the building base to provide heating to a bottom surface of the workpiece 102 to beneficially prevent thermal gradients between the bottom surface of the workpiece 102 and exterior portions of the workpiece 102.

In embodiments, the heating elements 146 are induction coils or electric resistance heating elements, though other forms of heaters may be used. In such embodiments, each of the heating elements 146 may be connected to a power source (not shown) that is controlled via a controller 148. As described below, the controller 148 may respond to various inputs (e.g., from a user of the additive manufacturing apparatus 100, from an ultrasonic stress sensor configured to measure stress in the workpiece 102 (not shown)) and selectively control the power source to heat the workpiece 102 at various points within a build process of the workpiece 102 by the additive manufacturing apparatus 100. For example, the oven 130 may be controlled to heat the cavity 134 to elevated temperatures to heat treat the workpiece 102 between different layers of deposition material being deposited on the build plate 104 by the deposition head 112 to alleviate residual stress in the workpiece 102 as the workpiece 102 is being constructed.

The oven lid 136 is disposed between the deposition head 112 and the furnace body 132 and includes an upper surface 150 and a lower surface 151. To provide clearance for the energy beam 122 and the material feeds 124 and 126 to reach the build plate 104, the oven lid 136 includes an opening 154. In the illustrated embodiment, the opening 154 is centered within the oven lid 136 and extends through the oven lid 136, from the upper surface 150 to the lower surface 151. The opening 154 being centered within the oven lid 136 facilitates constant overlap between the oven lid 136 and the cavity 134 irrespective of the positioning of the oven lid 136. However, alternative embodiments, where the opening 154 is not centered within the oven lid 136, are also envisioned. In embodiments, the size of the opening 154 is based on a distance between the material nozzle 114 and the oven lid 136 because the materials feeds 124 and 126, for example, may extend at angles between the material nozzle 114 and the build plate 104, and the opening 154 may be sized to provide clearance for the material feeds 124 and 126. The opening 154 may have any shape and depth profile depending on the implementation. In embodiments, the opening 154 has a minimum size allowable while still allowing for material feed and directed energy to pass there-through. In other embodiments, oven lid 136 has a pair of openings, with a first of the pair of openings provided for passing the material feed there-through and a second of the pair of openings provided for passing the directed energy there-through.

As described herein, the deposition head 112 may be translatable within the x-y plane so as to deposit a layer of deposition material onto the build surface on the build plate 104. Such movement of the deposition head 112 may cause a misalignment between the opening 154 and the deposition head 112 such that the upper surface 150 of the oven lid 136 blocks the energy beam 122 and the material feeds 124 and 126 from reaching the build plate 104. In embodiments, to facilitate continuous access to the build plate 104 by the energy beam 122 and the materials feeds 124 and 126, the oven lid 136 moves in conjunction with the deposition head 112 as the deposition head 112 translates. Stated differently, the oven lid 136 is movable with the deposition head 112, and the oven lid 136 and the deposition head 112 are movable together. The movability of the oven lid 136 facilitates the size of the opening 154 being minimized, while still providing adequate clearance for the energy beam 122 and material feeds 124 and 126. The opening 154 being minimized improves the performance of the oven 130, for example, by reducing convection of the heat supplied by the heating elements 146 to the environment external to the oven 130.

The parallel movement of the oven lid 136 and the deposition head 112 may be accomplished in a variety of ways. As exemplified in FIG. 1, the oven lid 136 may be attached to the exterior surface 168 of the deposition head 112 via an oven attachment member 158 attached to the upper surface 150 of the oven lid 136. In embodiments, the oven lid 136 is suspended from deposition head 112 via mechanical fasteners such as screws. In embodiments, the oven lid 136 is coupled to the deposition head 112 in a manner that allows relative vertical movement of the oven lid 136 relative to the deposition head 112. For example, where the oven lid 136 is slidable on the furnace body 132, the deposition head 112 may include alignment features such as vertically oriented pins that engage corresponding holes in the oven lid 136 (or vice versa) to thereby allow the oven lid 136 to move vertically relative to deposition head 112 to prevent the deposition head 112. The alignment features may physically interconnect the deposition head 112 and the oven lid 136 together while allowing for limited relative vertical translation of the oven lid 136 relative to the deposition head 112 such that the deposition head 112 may eventually lift the oven lid 136 after vertically translating a sufficient amount. For example, the alignment features may be attached to the deposition head 112 and have flange portion that will interact with and catch a ridge within the corresponding holes in the oven lid 136. In this manner, a single motor (e.g., coupled to either the oven lid 136 or to the deposition head 112) may be utilized to translate the combination of the oven lid 136 and the deposition head 112 with respect to the build plate 104. However, alternative embodiments, where the oven lid 136 is not attached to the deposition head 112 and the additive manufacturing apparatus 100 includes a separate translation device configured to move the oven lid 136 are also envisioned (e.g., the controller 148 may provide separate control signals to provide parallel movement of the oven lid 136 and the deposition head 112).

Though only a single oven attachment member 158 on a single side of the deposition head 112 is shown, the oven lid 136 may be attached to the deposition head 112 using any number of attachments in any configuration. For example, in an embodiment, the oven attachment member 158 may have a shape corresponding to the deposition head 112 (e.g., substantially cylindrical-shaped) and may circumferentially contact an entirety of the exterior surface 168 of the deposition head. In other embodiments, the oven lid 136 may be directly attached to the deposition head 112. For example, opening 154 may be directly attached to the exterior surface 168 such that at least a portion of the deposition head 112 is disposed within the opening 154. In other examples, the oven lid 136 may be attached to the support arm 110 which supports the deposition head 112. In other examples, the deposition head 112 and the oven lid 136 are not attached to each other, but are instead movable together via independent movement systems. For example, the oven lid 136 may be movable via a motor that is configured to move the oven lid 136 based on movement of the deposition head 112, such that the oven lid 136 tracks movement of the deposition head 112 while covering the cavity 134.

As described herein, in some embodiments, the furnace body 132 may be fixed to the base 106 such that the furnace body 132 is stationary. Providing the furnace body 132 in a stationary manner beneficially simplifies construction of the additive manufacturing apparatus by simplifying connections between components (e.g., heating elements 146 and a power source external to the oven 130). In these embodiments, the oven lid 136 is configured to be movable with respect to the (stationary) furnace body 132 to facilitate movement of the oven lid 136 in conjunction with the deposition head 112. To facilitate mobility of the oven lid 136, in some examples, the oven lid 136 need not be in physical contact with the furnace body 132. In such embodiments, the lower surface 151 of the oven lid 136 is separated from edges of the sidewalls 138 of the furnace body by less than a predetermined distance. In embodiments, the oven lid 136 may be spaced from the edges of the sidewalls 138 by as small of a distance as possible without interference there-between. In embodiments, the oven lid 136 is spaced about 0.1 inch from the edges of the sidewalls 138. As illustrated in FIGS. 1-2, in other embodiments, the lower surface 151 is in physical contact with upper edges of the sidewalls 138, but the oven lid 136 is still movable with respect to the furnace body 132 (e.g., the oven lid 136 is slidable with respect to the furnace body 132). In embodiments, the upper edges of the sidewalls 138 (or the bottom surface of the oven lid 136) may be provided with rollers or a low friction material.

The deposition head 112 is positioned in FIG. 1 such that the oven lid 136 is centered with respect to the furnace body 132, for example, at a center of the range of motion 152 in the x-direction. In such a configuration, the oven lid 136 comprises an overhanging portion 160 that extends beyond the sidewalls 138 of the furnace body 132. The overhanging portion 160 possesses lengths (e.g., in both the x-direction and the y-direction) to accommodate the ranges of motion of the deposition head 112 (e.g., the range of motion 152 in the x-direction, and the range of motion in the y-direction (not shown)). For example, in embodiments, the overhanging portion 160 possess lengths in both the x-direction and the y-direction (e.g., on both sides of the oven 130) corresponding to half of the ranges of motion. This way, as shown in FIG. 2, if the deposition head 112 is moved to an end of the range of motion 152, the cavity 134 remains covered by the oven lid 136 and efficiency of heating is maintained. The overhanging portion 160 may be shorter or longer in other embodiments. Some embodiments may not include the overhanging portion 160. As described, the oven lid 136 is sufficiently sized to cover the cavity 134 during the entirety of the range of motion 152. In this manner, the cavity 134 is enclosed by the furnace body 132 and the oven lid 136, except at the opening 154 which provides clearance for the energy beam 122 and the material beams 124 and 126 and/or except at areas where the lower surface 151 of the oven lid 151 may not contact the sidewalls 138 of the furnace body 132 as discussed above. Regardless of the presence of the opening 154 and regardless of whether or not the oven lid 136 contacts the sidewalls 138 of the furnace body 132, the furnace body 132 and oven lid 136 are said to "substantially enclose" or "enclose" the cavity 134.

In the illustrated examples, the build plate 104 and the base 105 are supported within the furnace body 132 by the build plate support 162 disposed on the base 106. The build plate support 162 extends through the floor 140 of the furnace body 132. In some embodiments, the build plate support 162 is adjustable with respect to the furnace body 132 to permit movement of the build plate 104 in the z-direction between layers of deposition material being deposited on the build plate 104. For example, the build plate support 162 may be extendable/contractible in the z-direction (e.g., as an articulating or telescoping arm) and include the actuation device 163 communicably coupled to the controller 148. Alternatively or additionally, the build plate support 162 may also support and permit movement of the furnace body 132 in the z-direction. In embodiments where the deposition head 112 is maintained in a (constant) vertical position and the build plate 104 is vertically moved relative thereto, the build may begin with the build plate support 162 positioning and holding the build plate 104 proximate to an underside of the oven lid 136 and, as the build proceeds and the workpiece 102 grows in the vertical dimension, the build plate support 162 lowers the build plate 104 such that the top layer of the workpiece 102 is maintained at a constant vertical distance from the deposition head 112.

After a layer of deposition material is deposited on the build plate 104 via translation of the deposition head 112, the controller 148 may provide an instruction to the actuation device 163 to actuate the build plate support 162 and thereby move the build plate 104 by a predetermined distance in the negative z-direction based on a desired thickness of the next layer of deposition material to be deposited. In embodiments, a seal may be disposed between the build plate support 162 and the floor 140 of the furnace body 132 to facilitate heating efficiency.

A material conduit 164 is shown to extend through a portion of the base plate 105 and the build plate 104 and the floor 140 of the furnace body 132. The material conduit 164 may be disposed at an external portion of the build plate 104 that does not overlap with the range of motion 152 of the deposition head 112. In other words, the material conduit 164 may be disposed in an area of the build plate 104 that does not support the workpiece 102. During the build process of the workpiece 102, excess material from material feeds 124 and 126 may not be melted by the energy beam 122 and accumulate on the build plate 104. The material conduit 164 provides a pathway for such excess material to be removed from the cavity 134 such that the excess material does not become erroneously incorporated into the workpiece 102. The material conduit 164 provides the excess material to the excess bin 166 disposed on the base 106. The excess bin 166 may, for example, be emptied between or during builds to maintain a clean operating environment. Though only one material conduit 164 is shown, it should be appreciated that any number of material conduits 164 may be incorporated into the additive manufacturing apparatus 100 consistent with the present disclosure. In embodiments, scrapers could be connected within the cavity 134, for example, to the sidewalls 138, and movable to position the scrapers so as to scrape or brush excess material into the material conduits 164. In embodiments, portion of the build surface of the build plate 104 where the workpiece 102 is not located could have a funneled surface that funnels the excess material (e.g., powder) to the material conduits 164. In other embodiments where the material conduit 164 does not extend into the build plate 104, portions of the build plate 104 could slope away from the workpiece 102 to thereby allow the excess material to spill off of the build plate 104 and onto the floor 140, and the floor 140 may have a funnel shape leading to the material conduit 164 to thereby remove excess material.

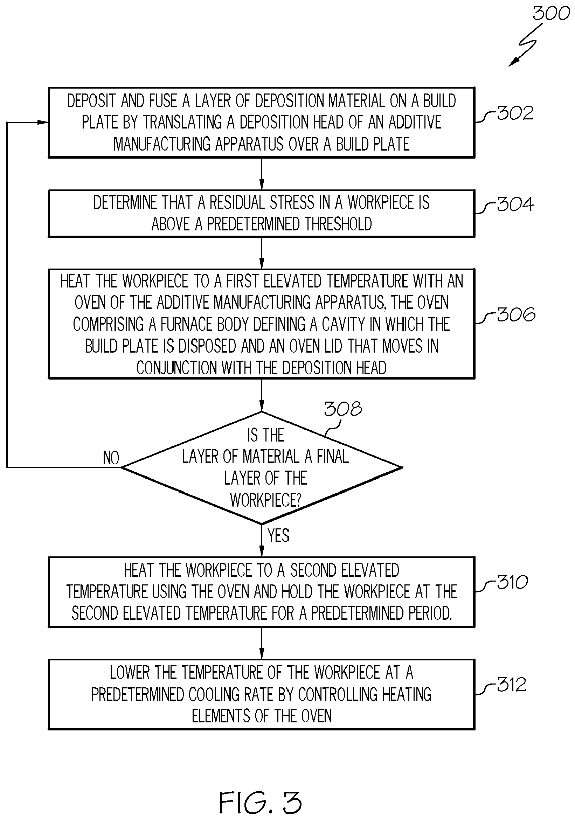

Referring now to FIG. 3, a method 300 of additive manufacturing a workpiece is shown, according to one or more embodiments described herein. The method 300 may be performed by the additive manufacturing apparatus 100 described with respect to FIGS. 1 and 2 herein. For example, the controller 148 may control the deposition head 112, the oven 130, and the build plate support 162 to perform the method 300 and construct a workpiece 102. It should be appreciated that the method 300 may also be performed by other additive manufacturing apparatuses.

In a step 302, a layer of deposition material is deposited and fused on the build plate 104 by translating the deposition head 112 of the additive manufacturing apparatus 100 over the build plate 104. For example, the controller 148 may receive a representation of the workpiece 102 and divide the workpiece 102 into a plurality of layers for deposition by the additive manufacturing apparatus 100. The controller 148 may control movement of the deposition head 112 in the x-direction and the y-direction to deposit the deposition material in a desired pattern corresponding to one the plurality of layers of the workpiece 102. As described herein, the deposition head 112 includes material sources 116 and 118 and an energy beam source 120. The material sources 116 and 118 provide material feeds 124 and 126 (e.g., as a wire, as a powder jet, etc.) to the build plate 104, where the material feeds 124 and 126 interact with an energy beam 122 from the energy beam source 120 such that the deposition material is melted to form a melt pool on the build plate 104. The melt pool may be fused to the build plate 104 upon cooling. As mentioned, the deposition material may comprise various different materials; however, in an example where the deposition material is Titanium 6-4 ("Ti 6-4"), the Ti6-4 is deposited with the oven 130 being heated to about 500° Celsius ("C").

In a step 304, it is determined that a residual stress in the workpiece 102 is above a predetermined threshold. The step 304 is optional. In embodiments, such a determination may be made by a user of the additive manufacturing apparatus 100 (e.g., upon observing the workpiece 102 during construction). The determination may also be made via the controller 148. For example, in embodiments, the controller 148 may have a plurality of instruction sets stored thereon that identify stress buildup, for example, based on the deposition material contained in the material feeds 124 and 126. Such instruction sets may include determinations based on previous builds that the threshold amount of residual stress is reached after a predetermined number of layers of deposition material are deposited and fused on the build plate 104. In embodiments, the controller 148 automatically determines that the residual stress in the workpiece 102 is above the predetermined threshold. As such, the step 302 may be repeated any number of times prior to the step 304. In embodiments, the additive manufacturing apparatus 100 includes at least one detector 149 (e.g., disposed in the cavity 134 defined by the furnace body 132, disposed on the build plate 104, etc.) communicatively connected to the controller 148 and configured to inspect the workpiece 102. The detector 149 may include, for example, a stress sensor (e.g., an ultrasonic transducer, piezoelectric transducer, etc.) and/or a camera configured to generate a detection signal (e.g., an image, a stress measurement) that is analyzed by the controller 148 to determine whether the residual stress is above the predetermined threshold. The predetermined threshold may be calculated by empirical data of the same or similar workpieces or pre-build analysis based on computer modeling.

Where utilized, the detector 149 may be provided such that it is able to take measurements of the workpiece 102 from within the cavity 134. In the illustrated example, the detector 149 is shown extending through the sidewall 138; however, the detector 149 may be differently provided. For example, it may be provided on the deposition head 112 and/or on the lower surface 151, or otherwise suspended within the cavity 134. In other embodiments, measurement of residual stress in the workpiece 102 is accomplished via a distortion prediction system that generates material property information for predicting distortion of the workpiece 102 during sintering. In such embodiments, the distortion prediction system may include a processor and a materials characterization module 510 having a plurality of testing workpiece models that may be input and stored (e.g., as part models) in the additive manufacturing apparatus 100, wherein the testing workpiece models have known material properties (i.e., residual stresses) based on testing of coupons formed by the additive manufacturing apparatus 100 that are meant to simulate the workpiece 102. In this manner, the materials characterization module includes material property information for simulating the distortion and residual stress of the workpiece 102 constructed using a plurality of different material configurations (e.g., particulate material, binder solution, scanning speed, curing parameters, and the like). Thus, determination of when stress build is enough to warrant a stress relieve cycle may be made using the detector 149 and/or via a predictive stress analysis performed with the distortion prediction system.

In a step 306, in response to the determination made in step 304, the workpiece 102 is heated with the oven 130 to a first elevated temperature above ambient. As described herein, the oven 130 includes the oven lid 136 and the furnace body 132 that enclose the cavity 134 defined by the sidewalls 138 and floor 140 of the furnace body 132. The oven lid 136 moves in conjunction with the deposition head 112 as the deposition head 112 moves over the build plate 104 to deposit layers of deposition material. The oven lid 136 (e.g., via the opening 154) provides a pathway for the material feeds 124 and 126 and the energy beam 122 to reach the build plate 104 that moves in a manner that parallels the movement of the deposition head 112. This way, the cavity 134 defines a heated build chamber that is substantially smaller than the volume of the additive manufacturing apparatus 100 without interrupting operation of the deposition head 112. Heating of the workpiece 102 is thus rendered more efficient, reducing heating times and energy expenditure of the oven 130.

The oven 130 includes at least one heating element 146 configured to heat the workpiece 102 and/or cavity 134. In embodiments, the controller 148 provides a control signal to the heating element 146 (or a power source connected thereto) to elevate a temperature within the cavity 134 to a first elevated temperature. In embodiments, the additive manufacturing apparatus 100 includes a temperature sensor (not shown) configured to monitor a temperature within the cavity 134 to provide feedback control of the heating element 146 via the controller 148. For example, in embodiments, power is provided to the at least one heating element 146 to heat the cavity 134 at a first predetermined heating rate until the first elevated temperature is reached. Once the first elevated temperature is reached, the controller 148 may control the at least one heating element 146 to maintain the temperature in the cavity 134 at the first elevated temperature for a first predetermined period to relieve the residual stress in the workpiece 102. In the above example using Ti6-4 as the deposition material, the oven 130 is further heated in step 306 such that the first elevated temperature is around 700° C.

A step 308 is a decision block. If the layer deposited on the build plate 104 at step 304 is a not a final layer of the workpiece 102, the method 300 may revert back to the step 302 to deposit another layer of deposition material on the build plate 104. In embodiments, the deposition of additional layers on the build plate 104 may occur while the cavity 134 is being heated via the at least one heating element 146 (e.g., while the cavity 134 is at the first elevated temperature). In embodiments, the deposition of additional layers on the build plate 104 may occur after the temperature within the cavity 134 is cooled to an ambient temperature of an environment of the additive manufacturing apparatus 100. In embodiments, the at least one heating element 146 may heat the cavity 134 to any temperature (e.g., between the first elevated temperature and the ambient temperature, at the first elevated temperature, above the first elevated temperature, etc.) while depositing additional layers. In embodiments, the additive manufacturing apparatus 100 incudes a cooler (not shown) configured to cool the cavity 134. Deposition of layers onto the build plate 104 may occur at temperatures below the ambient temperature as well.

If the layer of deposited material deposited at the step 302 is the final layer of the workpiece 102, the method 300 advances to a step 310. At the step 310, the workpiece 102 may be heated via the oven 130 to a second elevated temperature at a second predetermined heating rate that may be greater than or equal to, or less than or equal to, the first predetermined heating rate. The second elevated temperature may be greater than or equal to the first elevated temperature to which the workpiece 102 was heated during the step 306. For example, in embodiments, the second elevated temperature is greater than the first elevated temperature. The controller 148 may control the at least one heating element 146 to maintain the temperature within the cavity 134 at the second elevated temperature for a second predetermined period to further alleviate accumulated stress at various locations within the workpiece 102. In embodiments, the step 310 may also include any other heat treatments that may be desired to develop the strength of the workpiece 102 while in the oven 130, such as a precipitation hardening step and/or a final heat treatment. In the above example using Ti6-4 as the deposition material, the oven 130 is further heated during the step 310 such that the workpiece 102 is heated at a second elevated temperature of around 900° C for about 2 hours. In embodiments, the workpiece 102 may also be subject to hot isostatic pressing during the step 310. For example, the workpiece 102 could be hot isostatic pressed at a second elevated temperature of around 900° C and a pressure of 100MPa for about 2 hours.

In a step 312, the temperature of the workpiece 102 is lowered at a predetermined cooling rate by controlling the at least one heating element 146. The temperature within the cavity 134 may be lowered at the predetermined cooling rate until the temperature within the cavity 134 reaches the ambient temperature of the environment of the additive manufacturing apparatus 100. In embodiments, the predetermined cooling rate is based on the deposition material provided via the material feeds 124 and 126 (e.g., based on a coefficient of thermal expansion curve). Such controlled cooling beneficially minimizes temperature gradients within the cavity 134 and prevents further residual stress buildup in the workpiece 102 once completed. The predetermined cooling rate can be achieved by selectively cycling or otherwise controlling the at least one heating element 146. In the above example using Ti6-4 as the deposition material, the workpiece 102 is removed from the cavity 134 after the step 310, such that temperature of the workpiece 102 is lowered by exposing the workpiece 102 to air. In some embodiments, fans may be utilized to augment the lowering of the temperature of the workpiece 102.

In the above described embodiments of the additive manufacturing apparatus 100, the build plate 104 is provided in the cavity 134 of the oven 130 and at least partially covered via the oven lid 136 such that the workpiece 102 may be selectively heated or cooled. In other embodiments, however, the additive manufacturing apparatus 100 may also be configured to subject the workpiece 102 to a pressurized environment and/or cooling in addition to the heating. Thus, for example, the additive manufacturing apparatus 100 may be configured to subject the workpiece 102 to a hot isostatic press ("HIP") treatment which is beneficial for fixing internal occlusions or flaws in the workpiece 102. Typically with conventional additive manufacturing systems, the workpiece 102 will need to be sent to subsequent processing equipment where it may be subjected to HIP treatment or other subsequent processing. However, configuring the additive manufacturing apparatus 100 to also perform HIP treatments as described below will increase efficiency, as the workpiece 102 need not be subsequently sent to other equipment for HIP treatment. As described below, in some embodiments the oven 130 may be configured as an autoclave for pressurizing the workpiece 102 in the cavity 134, in addition to heating/cooling the workpiece 102 therein. As used herein, the term autoclave refers to a machine configured to carry out industrial and scientific processes requiring elevated temperature and/or elevated pressure relative to ambient temperature and/or ambient pressure. For example, the oven lid 136 may be removed from the furnace body 132 and replaced with an autoclave lid that encloses and seals the cavity 134, such that the cavity 134 may be pressurized. Thus, the cavity 134 may be heated when the oven lid 136 is positioned thereon, and then the cavity 134 may be pressurized and/or cooled when the autoclave lid is moved onto the furnace body 132.

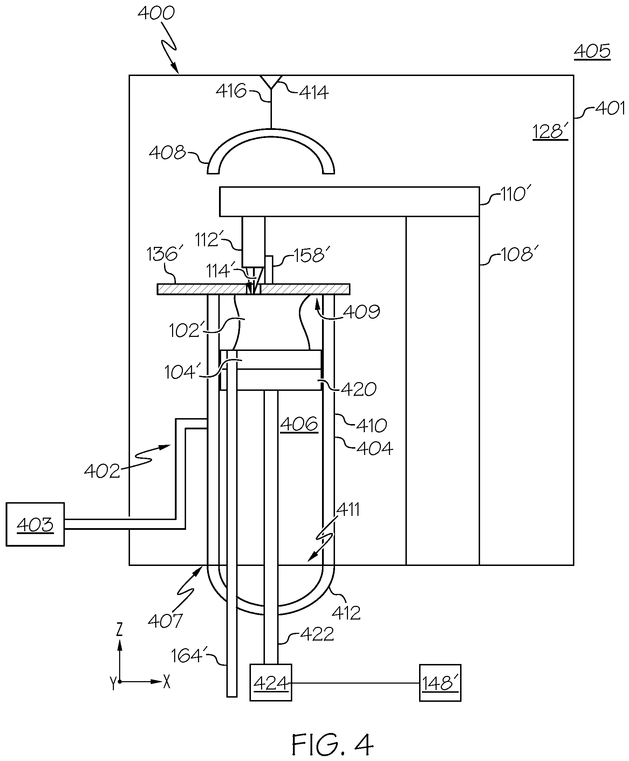

FIG. 4 illustrates an additive manufacturing apparatus 400 configured to build a workpiece 102' and subject the workpiece 102' to HIP treatment, according to one or more embodiments. The additive manufacturing apparatus 400 is similar to the additive manufacturing apparatus 100 described above, and thus includes a build plate 104' on which the workpiece 102' is built, a deposition head 112' that supports a material nozzle 114', and an oven lid 136' that moves with the deposition head 112'. In the illustrated embodiment, the oven lid 136' and the deposition head 112' are connected to each other via an oven attachment member 158', such that they movable together; however, in other embodiments, the oven lid 136' and the deposition head 112' are movable together via separate movement systems. One difference is that the additive manufacturing apparatus 400 of FIG. 4 also incorporates an autoclave 402 in which the workpiece 102' is built and in which the workpiece 102' may be subject to HIP treatments, instead of the oven 130 of the additive manufacturing apparatus 100. Accordingly, the autoclave 402 may include a pressure source 403 for increasing the pressure within the autoclave 402 as detailed below. As used herein, the term autoclave refers to a machine configured to carry out industrial and scientific processes requiring elevated temperature and/or elevated pressure relative to ambient temperature and/or ambient pressure, and autoclaves may also carry out cooling cycles.

In the illustrated embodiment, the deposition head 112' is supported on support arms 108' and 110', all of which are provided in a build chamber 128', and the build chamber 128 is defined within an enclosure 401. In the embodiment, the enclosure 401 may be a housing or a room. In this manner, the build chamber 128' may be sealed off from an exterior ambient environment 405 that is exterior the build chamber 128'. Also, the enclosure 401 has an opening 407 and, as described below, the autoclave 402 is provided at the opening 407 so as to maintain the build chamber 128' in a sealed state and to inhibit ingression between the exterior ambient environment 405 and the build chamber 128' which may include an inert gas atmosphere or vacuum atmosphere.

In the illustrated embodiment, the autoclave 402 includes an autoclave body 404 comprised of an upper autoclave lid 408, sidewalls 410, and a lower autoclave lid 412 that together define a cavity 406. As described herein, the build plate 104' is movable in the z-direction, and may thus be positioned within the cavity 406. The sidewalls 410 define an upper autoclave opening 409 that may be covered and sealed by the upper autoclave lid 408 and a lower autoclave opening 411 that may be covered and sealed by the lower autoclave lid 412. As illustrated, the lower autoclave opening 411 is provided at and communicates with the opening 407 such that the opening 407 is closed and sealed when the lower autoclave lid 412 is disposed on the sidewalls 410. Here, the sidewalls 410 are supported by an interior surface of the enclosure 401 within the build chamber 128', and extend from the interior surface of the enclosure 401 away from the opening 407 such that the upper autoclave opening 409 is positioned within the build chamber 128', further from the opening 407 than the lower autoclave opening 411. In other embodiments, the sidewalls 410 are provided within the opening 407, with a seal provided between the opening 407 and an exterior surface of the sidewalls 410, such that the upper autoclave opening 409 and the lower autoclave opening 411 of the sidewalls 410 are positioned on opposite sides of the opening 407.

The upper autoclave lid 408 is removable from the autoclave body 404 to allow the support arm 110' to position the deposition head 112' over the build plate 104' and thereby construct the workpiece 102' within the autoclave body 404. In the illustrated example, the upper autoclave lid 408 is suspended from an upper support structure 414 and a cable 416, wherein the upper support structure 414 may extend or retract the cable 416 to thereby raise or lower the upper autoclave lid 408 relative to the sidewalls 410 of the autoclave body 404. In the illustrated embodiment, the upper support structure 414 is mounted within the enclosure 401, for example, on a ceiling of the build chamber 128'. However, the upper support structure 414 may be provided exterior of the build chamber 128' such that the cable extends through the enclosure 401. In other embodiments, the upper autoclave lid 408 may be attached to the autoclave body 404 via hinges, such that the upper autoclave lid 408 may rotate off of the top side of the autoclave body 404 to an extent sufficient to allow positioning of the deposition head 112' and the oven lid 136' over the cavity 406 as described below.

Similarly, the lower autoclave lid 412 is removable from the sidewalls 410 of the autoclave body 404 to expose lower autoclave opening 411 and thereby allow removal of the build plate 104' with the workpiece 102' (when completed) thereon from the build chamber 128', with the remainder of the autoclave 402 remaining within the build chamber 128' and sealing the opening 407 in the enclosure 401. When the upper autoclave lid 408 and the lower autoclave lid 412 are both sealingly provided over the upper autoclave opening 409 and the lower autoclave opening 411 of the sidewalls 410, the cavity 406 is sealed from both the build chamber 128' and the exterior ambient environment 405, such that the cavity 406 may be independently controlled (e.g., pressurized, heated, cooled, etc.). However, when the lower autoclave lid 412 is sealingly provided over the lower autoclave opening 411 of the sidewalls 410 but the upper autoclave lid 408 is removed from the sidewalls 410 to expose the upper autoclave opening 409 to the build chamber 128', the cavity 406 and the build chamber 128' will be in communication with each other while being sealed off from the exterior ambient environment 405; whereas, when the upper autoclave lid 408 is sealingly provided over the upper autoclave opening 409 of the sidewalls 410 but the lower autoclave lid 412 is removed such that the lower autoclave opening 411 is exposed to the exterior ambient environment 405, the cavity 406 and the exterior ambient environment 405 will be in communication with each other and the build chamber 128' will be sealed off from the exterior ambient environment 405. This allows removal of the workpiece 102' without disturbing the build chamber 128'.

As previously mentioned, the oven lid 136' is movable in conjunction with the deposition head 112 (e.g., via the oven attachment member 158') such that the oven lid 136' will also be positioned over the cavity 406 as the deposition head 112' is so positioned. Thus, when the upper autoclave lid 408 is removed from the sidewalls 410, the oven lid 136' may cover the upper autoclave opening 409 and enclose the cavity 406 such that the cavity 406 may be selectively heated or cooled during deposition, even when the upper autoclave lid 408 is removed. After the deposition head 112' has deposited the deposition material and thereby formed the workpiece 102' (i.e., after deposition), the deposition head 112' and the oven lid 136' may be moved away from the upper autoclave opening 409 and the cavity 406, and then the upper autoclave lid 408 may be moved onto the sidewalls 410 of the autoclave body 404 to enclose and seal the cavity 406. For example, after deposition, the support arm 110' may rotate the deposition head 112' and the oven lid 136' away from the autoclave 402, such that they are not positioned over the cavity 406, and then the upper autoclave lid 408 may be lowered onto the sidewalls 410 to seal the upper autoclave opening 409 without being obstructed by the support arm 110', the deposition head 112', and/or the oven lid 136'. Then, once the upper autoclave lid 408 is sealingly provided on the sidewalls 410, and with the lower autoclave lid 412 also sealingly provided thereon, temperature and pressure within the cavity 406 may be set via the heating elements 146 and the pressure source 403 as may be appropriate to treat the workpiece 102', for example, via a HIP treatment.

The build plate 104' may be part of a build plate assembly that also comprises a movable base 420, a support shaft 422, and an actuation device 424. In the illustrated embodiment, the build plate 104' is provided on the movable base 420 that rotates the build plate 104', for example, about a rotation axis extending in the z-direction as described above with reference to the base plate 105. In other embodiments, the movable base 420 is operable to axial translate the build plate 104' along the rotation axis extending in the z-direction, such that the movable base 420 may facilitate vertical positioning of the build plate 104' within the cavity 406. In other embodiments, the movable base 420 is operable to both rotate the build plate 104' about the rotation axis and translate the build plate 104' along the rotation axis.

The build plate 104' and the movable base 420 are connected to the support shaft 422. The support shaft 422 may extend through the lower autoclave lid 412 and is operatively connected to the actuation device 424, wherein the actuation device 424 is operable to extend or retract the support shaft 422 (e.g., as an articulating or telescoping arm). Thus, in some embodiments, the support shaft 422 may be movable with respect to at least a portion of the autoclave body 404 to permit movement of the build plate 104 in the z-direction between layers of deposition material being deposited on the build plate 104. In some embodiments, the actuation device 424 may be communicably coupled to a controller 148'. In embodiments, the actuation device 424 and the support shaft 422 are operable to raise or lower the lower autoclave lid 412, such that the lower autoclave lid 412 may be removed and thereby facilitate removal or extraction of the workpiece 102'. In such embodiments, the lower autoclave lid 412 may be coupled to the support shaft 422 such that the lower autoclave lid 412 may be raised or lowered with the build plate 104. For example, the support shaft 422 may lower the lower autoclave lid 412 as it retracts the build plate 104' from the cavity 406. In embodiments, the lower autoclave lid 412 may move relative to the support shaft 422. For example, the lower autoclave lid 412 may be removed to uncover the lower autoclave opening 411 and expose the cavity 406, and then the support shaft 422 may be activated to retract the build plate 104' from the cavity 406. These embodiments allow removal of the workpiece 102' that has been subject to HIP treatment from the build plate 104' while maintaining a barrier between the build chamber 128' and the exterior ambient environment 405 when the lower autoclave lid 412 is sealed on the sidewalls 410. In other non-illustrated embodiments, the support shaft 422 may also support and move the autoclave body 404 (with or without the upper autoclave lid 408 and/or the lower autoclave lid 412 provided thereon) in the z-direction. For example, in such embodiments the actuation device 424 may be utilized to raise or lower the autoclave 402 into or out of the build chamber 128' of the enclosure 401.

In embodiments, the additive manufacturing apparatus 400 may incorporate multiple autoclaves as described below. Thus, for example, while the workpiece 102' is being built in the autoclave 402, other workpieces may be undergoing HIP treatments in other autoclaves, other built and HIP treated workpieces may be removed from their respective autoclaves, and still other autoclaves may be prepared for new builds.

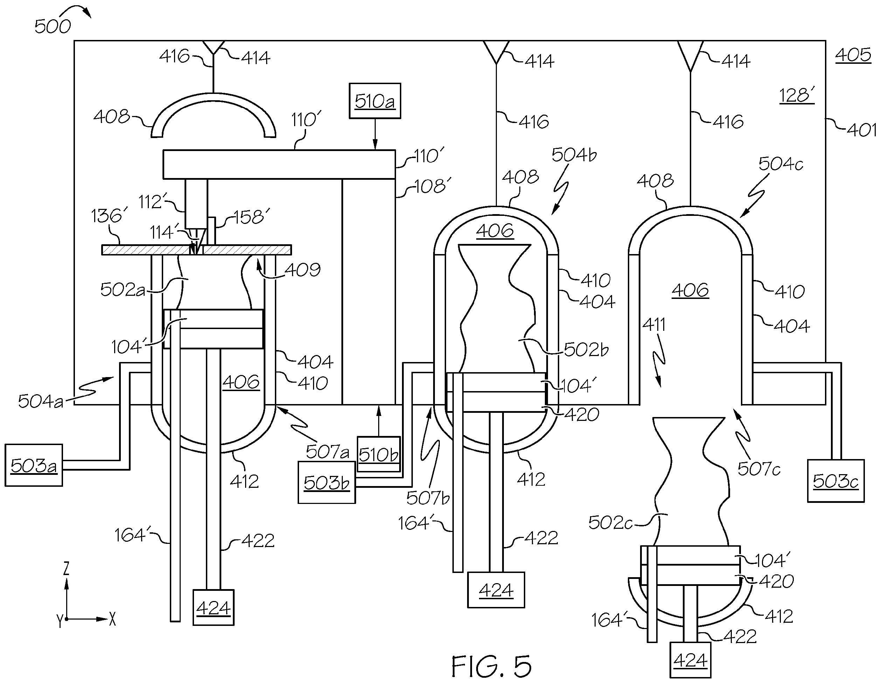

FIG. 5 illustrates an additive manufacturing apparatus 500 for building and HIP treating multiple workpieces 502a-c, according to one or more embodiments. Similar to the additive manufacturing apparatus 400 of FIG. 4, the additive manufacturing apparatus 500 includes the deposition head 112' and the oven lid 136' movable therewith; however, as described below, the additive manufacturing apparatus 500 is operable to build and treat multiple workpieces 502a-c. In the illustrated examples, the oven lid 136' is attached to the deposition head 112'; however, in other embodiments, they are unattached but move with each other as described above. In the illustrated embodiment, the additive manufacturing apparatus 500 includes a first autoclave 504a, a second autoclave 504b, and a third autoclave 504c that are each configured as described above with reference to the autoclave 402 of FIG. 4. It should be appreciated, however, that the additive manufacturing apparatus 500 may include more or less than the three autoclaves 504a-c without departing from the present disclosure. In the illustrate embodiment, the enclosure 401 includes a first opening 507a associated with the first autoclave 504a, a second opening 507b associated with the second autoclave 504b, and a third opening 507c associated with the third autoclave 504c.

In the illustrated embodiment, each of the autoclaves 504a-c includes an individual pressure source 503a-c associated with it. However, in other embodiments, a single power source may be provided for separately pressurizing any one or more of the three autoclaves 504a-c independent of each other.

Here, the additive manufacturing apparatus 500 is building the first workpiece 502a in the first autoclave 504a, as described above with reference to FIG. 4. While the first workpiece 502a is being built in the first autoclave 504a, the second autoclave 504b is HIP treating the second workpiece 502b within the cavity 406 thereof. While the first workpiece 502a is being built in the first autoclave 504a and while the second workpiece 502b is being HIP treated in the second autoclave 504b, the third autoclave 504c is being opened, by removing the lower autoclave lid 412 and removing the build plate 104' from the cavity 406 of the third autoclave 504c through the lower autoclave opening 411 and the third opening 507c in the build chamber 128', such that the third workpiece 502c may be extracted from the additive manufacturing apparatus 500 without disrupting the build chamber 128' and operation of the first autoclave 504a and the second autoclave 504b. As mentioned above, the sidewalls 410 of the third autoclave 504c are sealed around the opening 507c in the build chamber 128' and the upper autoclave lid 408 of the third autoclave 504c are sealed on the sidewalls 410 thereof, such that the sidewalls 410 and the upper autoclave lid 408 of the third autoclave 504c form a physical barrier that separates and seals the environment within the build chamber 128' from the exterior ambient environment 405. Thus, the third workpiece 502c may be removed from the cavity 406 of the third autoclave 504c, which is illustrated as being exposed to the exterior ambient environment 405, without disrupting the build chamber 128' which may include an inert gas atmosphere or vacuum atmosphere.

Each of the autoclaves 504a-c are operable in this manner, such that the environment within the build chamber 128' is continuously sealed off from the exterior ambient environment 405, while allowing removal of any of the workpieces 502a-c without disrupting the environment within the build chamber 128'. By providing each of the autoclaves 504a-c with the upper autoclave lid 408 and the lower autoclave lid 412 that are each separately removable from the sidewalls 410 and by sealing each of the sidewalls 410 within the particular one of the openings 507a-c associated therewith, the environment of the build chamber 128' may be maintained while permitting removal of one or more of the workpieces 502a-c.

In embodiments, the support arm 110' may rotate, about a vertical axis extending in the z-direction, so as to move the deposition head 112' from the first autoclave 504a, to either the second autoclave 504b or the third autoclave 504c. Here, the deposition head 112' may access the cavity 406 of either the second autoclave 504b or to the third autoclave 504c when the upper autoclave lid 408 associated therewith is moved (or raised) out of the way of the support arm 110' and the deposition head 112' so as to expose the upper autoclave opening 409, as illustrated with respect to the first autoclave 504a. Also, in embodiments where the oven lid 136' is integrally attached to the deposition head 112, such removal of the upper autoclave lid 408 allows the deposition head 112' to position the oven lid 136' over the cavity 406 to thereby permit heating during deposition. In such embodiments, the deposition material may be fed to the deposition head 112' from an upper feed system 510a and/or a lower feed system 510b. In this manner, it is possible to feed deposition material to the deposition head 112' without the support arm 110' interfering or obstructing such feed as it moves and rotates between autoclaves 504a-c.

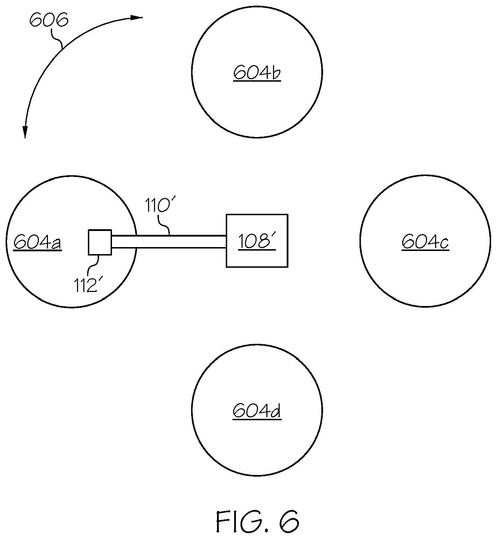

FIG. 6 illustrates an additive manufacturing apparatus 600 having autoclaves 604a-d arrayed around the support arms 108', 110', according to one or more embodiments. In the illustrated example, the support arm 110' may rotate the deposition head 112' clockwise or counter clockwise, as indicated by arrow 606. It should be appreciated, however, that the autoclaves 604a-d may be oriented differently about the support arms 108', 110'. In the illustrated example, a first workpiece (obscured from view) is being built in the first autoclave 604a. Also in the illustrated example, the other autoclaves 604b-d may each be HIP treating a respective workpiece. In addition, one or more of the other autoclaves 604b-d may be done HIP treating its workpiece and may lowered out of the build chamber for removal of its workpiece. Moreover, any one or more of the other autoclaves 604b-d not have a workpiece therein and may be in the process of being readied for a new build. In this manner, the additive manufacturing apparatus 600 efficiently builds and treats multiple workpieces without having to send the workpieces to other equipment/factories for subsequent treatment.

In view of the foregoing description, it should be understood that providing a heated build chamber in the immediate vicinity of a workpiece being constructed by an additive manufacturing apparatus facilities relieving stresses accumulated in the workpiece during the additive manufacturing process while providing efficiency in heating the workpiece. The workpiece may be a large format part that is grown in the heated build chamber on a build plate that is lowered as the workpiece is built. Such a heated build chamber may be provided by an oven comprising a furnace body defining a cavity of the heated build chamber and an oven lid disposed between a build plate upon which the workpiece is constructed and the furnace body. The oven lid may include an opening to allow an energy beam and/or material feeds from a deposition head of the additive manufacturing apparatus to reach the build plate so that layers of deposition material can be provided onto the build plate. The oven lid may move in conjunction with the deposition head during the deposition of the layers of deposition material such that the heated build chamber is enclosed by the oven irrespective of a position of the deposition head. This way, heating efficiencies of the oven are fully realized and time is saved during stress relief due to reduced heating times. The oven may maintain the workpiece and the build plate at a temperature appropriate to preclude undo distortion or cracking of the workpiece as it is grown and, in embodiments, during the build of the workpiece, the material deposition may be paused and the temperature of the oven may be raised further to perform an "in-process" stress relief. In embodiments, an autoclave may be utilized instead of the oven, such that the heated build chamber is provided within the autoclave. In addition to heating, the autoclave permits pressurization of the build chamber, such that the workpiece built therein may be subjected to a pressure treatment, such as a hot isostatic press treatment; and, moreover, utilization of the autoclave allows the operator to subject the workpiece to cooling. Where utilized, the autoclave may include a removable upper lid and/or a removable lower lid, that may be separately removed. The removable upper lid allows an over lid that moves in conjunction with the deposition head to be moved over the heated build chamber during material deposition and, after the deposition head and oven lid have been moved away, the removable upper lid may be secured on the autoclave such that the built workpiece is pressure treated. Then, after completion of the workpiece, the removable lower lid may be removed such that the finished workpiece is extracted from the build chamber of the autoclave. In embodiments, several autoclaves may be provided in a build chamber for manufacturing several workpieces, each having a removable upper lid and a removable lower lid, with a workpiece being built by the deposition head in a first autoclave covered by the oven lid, while another workpiece in a second autoclave is being pressure treated, while a third workpiece that is finished may be retracted from the third autoclave without disturbing the build chamber.

Further aspects of the embodiments described herein are provided by the subject matter of the following clauses:
Clause 1. A method of additively manufacturing a workpiece, the method comprising: translating a deposition head of an additive manufacturing apparatus over a build surface of a build plate to form a layer of a material, wherein the deposition head comprises: a material nozzle through which the material is deposited as a deposited material; and an energy source configured to apply an energy beam to the deposited material to melt the deposited material at the build surface; and heating the deposited material with an oven after the layer is deposited on the build surface, wherein the oven comprises: a furnace body defining a cavity in which the build plate is disposed; and an oven lid movable with the deposition head and disposable on the furnace body, wherein, when provided on the furnace body, the oven lid and the furnace body enclose the cavity which provides a heated build chamber upon application of the heating.
Clause 2: the method of the above clause, further comprising pressurizing the deposited material in the cavity after heating.
Clause 3: the method of the above clause, wherein pressurizing the deposited material in the cavity comprises: moving the deposition head away from the build plate to thereby remove the oven lid from the furnace body; providing an autoclave lid on the furnace body to seal the cavity; and pressurizing the cavity.
Clause 4: the method of clause 2, wherein the pressurizing is a hot isostatic pressurizing of the deposited material in the cavity after heating, and the hot isostatic pressurizing of the deposited material in the cavity comprises: moving the deposition head away from the build plate to thereby remove the oven lid from the furnace body; providing an autoclave lid on the furnace body to seal the cavity; and heating the cavity and pressurizing the cavity with isostatic gas pressure.
Clause 5: the method of any of the above clauses, wherein the deposition head is movably attached to a support structure such that the deposition head is movable in at least a first direction in an amount that corresponds to a range of motion of the deposition head.
Clause 6: the method of any of the above clauses, wherein the translating of the deposition head over the build plate comprises moving the deposition head a first distance in the first direction over the build plate relative to the support structure, wherein the first distance is less than or equal to the range of motion.
Clause 7: the method of any of the above clauses, wherein the furnace body comprises sidewalls having upper edges and a lower surface of the oven lid physically contacts the upper edges of the sidewalls of the furnace body during at least a portion of the range of motion of the deposition head.
Clause 8: the method of any of the above clauses, wherein the lower surface of the oven lid physically contacts the upper edges of the sidewalls of the furnace body during an entirety of the range of motion of the deposition head.
Clause 9: the method of any of the above clauses, further comprising, after heating the deposited material, evacuating excess portions of the deposited material from the heated build chamber through a material conduit that extends through the furnace body, wherein the material comprises a metal or alloy powder.
Clause 10: the method of any of the above clauses, wherein the material conduit extends through a portion of the build plate and through a floor of the furnace body.
Clause 11: the method of any of the above clauses, wherein the furnace body comprises sidewalls, and a lower surface of the oven lid physically contacts upper edges of the sidewalls of the furnace body during at least a portion of the range of motion of the deposition head.
Clause 12: the method of any of the above clauses, further comprising depositing and melting a final layer of the workpiece, and further comprising heating, with the oven, the workpiece to a second elevated temperature that is greater than the first elevated temperature and maintaining the workpiece at the second elevated temperature for a predetermined period to further remove accumulated stresses in the workpiece.
Clause 13: the method of any of the above clauses, further comprising, after the predetermined period, lowering a temperature of the workpiece to the ambient temperature at a pre-determined cooling rate by controlling at least one heating element of the oven.
Clause 14: the method of any of the above clauses, wherein the oven lid is attached to the deposition head.
Clause 15: the method of any of the above clauses, wherein the heating of the deposited material comprises: moving the oven lid in conjunction with a translation of the deposition head such that the heated build chamber is substantially enclosed by the oven lid and the furnace body irrespective of a position of the deposition head.
Clause 16: the method of any of the above clauses, further comprising determining that a residual stress in the workpiece is above a predetermined amount.
Clause 17: a method of additively manufacturing a workpiece, the method comprising: depositing a material as a layer of material on a build surface of a build plate by translating a deposition head of an additive manufacturing apparatus over the build surface, wherein the deposition head comprises a material nozzle through which the layer of material is deposited onto the build plate; fusing the layer of material with an energy source configured to apply an energy beam to the material to melt the material at the build surface of the build plate to form a layer of the workpiece; determining that a residual stress in the workpiece is above a predetermined amount; and responsive the determining that the residual stress in the workpiece is above the predetermined amount, heating the layer of the workpiece with an oven, wherein the oven comprises: a furnace body defining a cavity in which the build plate is disposed; an oven lid movable with the deposition head and disposable on the furnace body, wherein, when provided on the furnace body, the oven lid and the furnace body enclose the cavity to thereby provide a heated build chamber upon application of the heating; and a heating element configured to heat the heated build chamber, wherein: the oven lid moves in conjunction with a translation of the deposition head.
Clause 18: the method of any of the above clauses, wherein the heating of the layer with the oven comprises maintaining the deposited layer of material at a first elevated temperature above an ambient temperature, and wherein the layer of material comprises a final layer of the workpiece, the method further comprises: heating, with the oven, the workpiece to a second elevated temperature that is greater than the first elevated temperature and maintaining the workpiece at the second elevated temperature for a predetermined period to further remove accumulated stresses in the workpiece; and after the predetermined period, lowering a temperature of the workpiece to the ambient temperature at a pre-determined cooling rate by controlling at least one heating element of the oven.
Clause 19: the method of any of the above clauses, further comprising hot isostatic pressing the deposited material in the cavity after heating, wherein the hot isostatic pressing of the deposited material in the cavity comprises: moving the deposition head away from the build plate to thereby remove the oven lid from the furnace body; providing an autoclave lid on the furnace body to seal the cavity; and heating the cavity and pressurizing the cavity with isostatic gas pressure.
Clause 20: the method of any of the above clauses, wherein the determining is automatic via a controller.
Clause 21: a manufacturing device, comprising: an enclosure defining a build chamber and comprising an opening; an autoclave associated with the opening in the enclosure and comprising: sidewalls sealed around the opening in the enclosure and at least partially defining a build cavity, the sidewalls having an upper autoclave opening and a lower autoclave opening opposite the upper autoclave opening that communicate with the build cavity; an upper autoclave lid provided on the sidewalls to sealably cover the upper autoclave opening, the upper autoclave lid being removable from the sidewalls to expose the upper autoclave opening and build cavity; and a lower autoclave lid provided on the sidewalls to sealably cover the lower autoclave opening, the lower autoclave lid being removable from the sidewalls to expose the lower autoclave opening and build cavity; a build plate assembly associated with the autoclave and comprising a build plate and an actuation device operatively coupled to the build plate to axially translate the build plate relative to the build cavity of the autoclave, wherein, when the lower autoclave lid is removed from the lower autoclave opening, the actuation device is operable to move the build plate into or out of the build cavity through the lower autoclave opening; and a deposition assembly disposed in the build chamber and comprising: a deposition head that is movable relative to the autoclave; a material nozzle connected to the deposition head and movable therewith, the material nozzle operable to deposit material onto the build plate when positioned over the upper autoclave opening with the upper autoclave lid removed from the upper autoclave opening and when the build plate is positioned within the build cavity; an energy source connected to the deposition head and movable therewith, the energy source operable to apply energy to material deposited through the material nozzle and thereby melt deposited material to thereby form the workpiece; and an oven lid that is movable with the deposition head and movable in conjunction with the deposition head so as to cover the upper autoclave opening of the autoclave as the deposition assembly deposits melted material, the oven lid being positionable over the upper autoclave opening of the autoclave when the upper autoclave lid is removed from the sidewalls.
Clause 22: the additive manufacturing device comprising of any of the above clauses, wherein the build plate assembly further comprises a movable base on which the build plate is provided, the movable base being operable to rotate the build plate about an axis and/or translate the build plate along the axis.
Clause 23 the additive manufacturing device comprising of any of the above clauses, wherein the build cavity of the autoclave is in communication with the build chamber of the enclosure but sealed off from an exterior ambient environment when the lower autoclave lid is provided on the sidewalls to sealably cover the lower autoclave opening and when the upper autoclave lid is removed from the upper autoclave opening, wherein the build cavity is in communication with the exterior ambient environment but sealed off from the build chamber of the enclosure when the upper autoclave lid is provided on the sidewalls to sealably cover the upper autoclave opening and when the lower autoclave lid is removed from the lower autoclave opening, and wherein the autoclave heats and pressurizes the build cavity when the upper autoclave lid and the lower autoclave lid are both disposed on the sidewalls.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. A method (300) of additively manufacturing a workpiece (102), the method (300) comprising:
translating a deposition head (112) of an additive manufacturing apparatus (100) over a build surface of a build plate (104) to form a layer of a material, wherein the deposition head (112) comprises:
a material nozzle (114) through which the material is deposited as a deposited material; and
an energy source configured to apply an energy beam (122) to the deposited material to melt the deposited material at the build surface; and
heating the deposited material with an oven (130) after the layer is deposited on the build surface, wherein the oven (130) comprises:
a furnace body (132) defining a cavity (134) in which the build plate (104) is disposed; and
an oven lid (136) movable with the deposition head (112) and disposable on the furnace body (132), wherein, when provided on the furnace body (132), the oven lid (136) and the furnace body (132) enclose the cavity (134) which provides a heated build chamber (128) upon application of the heating.

2. The method (300) of claim 1, further comprising pressurizing the deposited material in the cavity (134) after heating.

3. The method (300) of claim 2, wherein pressurizing the deposited material in the cavity (134) comprises:
moving the deposition head (112) away from the build plate (104) to thereby remove the oven lid (136) from the furnace body (132);
providing an autoclave (402) lid on the furnace body (132) to seal the cavity (134); and
pressurizing the cavity (134).

4. The method (300) of any preceding claim, wherein the pressurizing is a hot isostatic pressurizing of the deposited material in the cavity (134) after heating, and the hot isostatic pressurizing of the deposited material in the cavity (134) comprises:
moving the deposition head (112) away from the build plate (104) to thereby remove the oven lid (136) from the furnace body (132);
providing an autoclave (402) lid on the furnace body (132) to seal the cavity (134); and
heating the cavity (134) and pressurizing the cavity (134) with isostatic gas pressure.

5. The method (300) of any preceding claim, wherein the deposition head (112) is movably attached to a support structure such that the deposition head (112) is movable in at least a first direction in an amount that corresponds to a range of motion (152) of the deposition head (112).

6. The method (300) of claim 5, wherein the translating of the deposition head (112) over the build plate (104) comprises moving the deposition head (112) a first distance in the first direction over the build plate (104) relative to the support structure, wherein the first distance is less than or equal to the range of motion (152).

7. The method (300) of claim 6, wherein the furnace body (132) comprises sidewalls (138) having upper edges and a lower surface (151) of the oven lid (136) physically contacts the upper edges of the sidewalls (138) of the furnace body (132) during at least a portion of the range of motion (152) of the deposition head (112).

8. The method (300) of claim 7, wherein the lower surface (151) of the oven lid (136) physically contacts the upper edges of the sidewalls (138) of the furnace body (132) during an entirety of the range of motion (152) of the deposition head (112).

9. The method (300) of any preceding claim, further comprising, after heating the deposited material, evacuating excess portions of the deposited material from the heated build chamber (128) through a material conduit (164) that extends through the furnace body (132), wherein the material comprises a metal or alloy powder.

10. The method (300) of claim 9, wherein the material conduit (164) extends through a portion of the build plate (104) and through a floor (140) of the furnace body (132).

11. The method (300) of any preceding claim, wherein the heating of the deposited material with the oven (130) comprises maintaining the layer of the deposited material at a first elevated temperature above an ambient temperature of an environment of the additive manufacturing apparatus (100) to relieve stresses in the workpiece (102).

12. The method (300) of claim 11, further comprising depositing and melting a final layer of the workpiece (102), and further comprising heating, with the oven (130), the workpiece (102) to a second elevated temperature that is greater than the first elevated temperature and maintaining the workpiece (102) at the second elevated temperature for a predetermined period to further remove accumulated stresses in the workpiece (102).

13. The method (300) of any preceding claim, wherein the oven lid (136) is attached to the deposition head (112).

14. The method (300) of any preceding claim, wherein the heating of the deposited material comprises:
moving the oven lid (136) in conjunction with a translation of the deposition head (112) such that the heated build chamber (128) is substantially enclosed by the oven lid (136) and the furnace body (132) irrespective of a position of the deposition head (112).

15. The method (300) of any preceding claim, further comprising determining that a residual stress in the workpiece (102) is above a predetermined amount.
